(19) Europäisches Patentamt / European Patent Office / Office européen des brevets

(11) **EP 1 593 241 B1**

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(21) Anmeldenummer: **04708742.4**

(22) Anmeldetag: **06.02.2004**

(51) Int Cl.:
**H04L 12/56** (2006.01)

(86) Internationale Anmeldenummer:
**PCT/EP2004/001118**

(87) Internationale Veröffentlichungsnummer:
**WO 2004/073264 (26.08.2004 Gazette 2004/35)**

(54) **ZUGANGSKONTROLLE FÜR EIN PAKETORIENTIERTES NETZ UNTER BERÜCKSICHTIGUNG VON RESILIENCE ANFORDERUNGEN**

ACCESS CONTROL FOR A PACKET-ORIENTED NETWORK, TAKING INTO ACCOUNT RESILIENCE REQUIREMENTS

CONTROLE D'ACCES A UN RESEAU ORIENTE PAQUET EN FONCTION D'EXIGENCES DE RESILIENCE

(84) Benannte Vertragsstaaten:
**DE ES FR GB**

(30) Priorität: **14.02.2003 DE 10306292**

(43) Veröffentlichungstag der Anmeldung:
**09.11.2005 Patentblatt 2005/45**

(73) Patentinhaber: **NOKIA SIEMENS NETWORKS GMBH & CO. KG**
**81541 München (DE)**

(72) Erfinder:
• **CHARZINSKI, Joachim**
**81825 München (DE)**
• **MENTH, Michael**
**97255 Gelchsheim/Oellingen (DE)**
• **SCHRODI, Karl**
**82538 Geretsried (DE)**

(56) Entgegenhaltungen:
EP-A- 0 999 674          US-B1- 6 272 139
US-B1- 6 392 989

• BAROLLI L ET AL: "An intelligent routing and CAC framework for large-scale networks based on cooperative agents" COMPUTER COMMUNICATIONS, ELSEVIER SCIENCE PUBLISHERS BV, AMSTERDAM, NL, Bd. 25, Nr. 16, 1. Oktober 2002 (2002-10-01), Seiten 1429-1442, XP004358971 ISSN: 0140-3664

**Beschreibung**

Die Erfindung betrifft ein Verfahren zur Bereitstellung von Ressourcen für eine Anpassung des Routings als Reaktion auf den Ausfall eines Netzelements in einem paketorientierten, mit Knoten und Links gebildeten Netz.

Derzeit ist die Entwicklung von Technologien für paketbasierte Netze ein zentrales Betätigungsfeld für Ingenieure aus den Gebieten der Netztechnik, der Vermittlungstechnik und der Internet-Technologien.

Dabei steht das Ziel im Vordergrund, möglichst ein paketorientiertes Netz für beliebige Dienste verwenden zu können. Traditionell werden über paketorientierte Netze zeitunkritische Datenübertragungen vorgenommen, wie z.B. der Transfer von Dateien oder elektronischer Mail. Sprachübertragung mit Echtzeitanforderungen wird herkömmlich über Telefonnetze mit Hilfe von der Zeitmultiplextechnik abgewickelt. Man spricht in diesem Zusammenhang häufig auch von TDM (time division multiplexing) Netzen. Mit der Verlegung von Netzen mit hoher Bandbreite bzw. Übertragungskapazität ist neben der Daten- und Sprachübertragung auch die Realisierung von Bildbezogenen Diensten in den Bereich des Machbaren gerückt. Übertragung von Videoinformationen in Echtzeit, z.B. im Rahmen von Video-on-demand Diensten oder Videokonferenzen, wird eine wichtige Kategorie von Diensten zukünftiger Netze sein.

Die Entwicklung zielt dahin, möglichst alle Dienste, datenbezogene, sprachbezogene und auf Videoinformationen bezogene, über ein paketorientiertes Netz durchführen zu können. Für die verschiedenen Anforderung bei der Datenübertragung im Rahmen der verschiedenen Dienste definiert man üblicherweise Dienstklassen. Die Übertragung mit einer definierten Dienstqualität (quality of service) vor allem bei Diensten mit Echtzeitanforderungen verlangt eine entsprechende Steuerung bzw. Kontrolle für die Paketübertragung über das Netz. Im Englischen gibt es eine Reihe von Begriffen die sich auf die Kontrolle bzw. Steuerung des Verkehrs beziehen: traffic management, traffic conditioning, traffic shaping, traffic engineering, policing ect. Verschiedene Vorgehensweisen für eine Kontrolle bzw. Steuerung für den Verkehr eines paketorientierten Netzes sind in der einschlägigen Literatur beschrieben, siehe z.B. die Patentschrift EP-A-0 999 674.

Bei ATM (asynchroneous transfer mode) Netzen wird für jede Datenübertragung auf der gesamten Übertragungsstrecke eine Reservierung vorgenommen. Durch die Reservierung wird das Verkehrsaufkommen beschränkt. Zur Überwachung findet abschnittsweise eine Überlastkontrolle statt. Eine eventuelle Verwerfung von Paketen wird nach Maßgabe des CLP-Bits (CLP: Cell loss priority) des Paketheaders vorgenommen.

Das Diff-Serv (Differentiated Services) Konzept wird bei IP (internet protocol) Netzen angewendet und zielt auf eine bessere Dienstqualität für Dienste mit hohen Qualitätsanforderungen durch Einführung von Dienstklassen. Man spricht in diesem Zusammenhang auch häufig von einem CoS (class of service) Modell. Das Diff-Serv Konzept ist in den von der IETF veröffentlichten RFCs mit den Nummern 2474 und 2475 beschrieben. Im Rahmen des Diff-Serv Konzepts wird mit Hilfe eines DS (Differentiated Services) Feldes im IP Header der Datenpakete durch Setzen des DSCP (DS codepoint) Parameters eine Priorisierung des Paketverkehrs vorgenommen. Diese Priorisierung erfolgt mit Hilfe einer "per hop" Ressourcenallokation, d.h. die Pakete erfahren bei den Knoten je nach der im DS Feld durch den DSCP Parameter festgelegten Dienstklasse (class of service) eine unterschiedliche Behandlung. Die Kontrolle bzw. Steuerung des Verkehrs wird also nach Maßgabe von den Dienstklassen vorgenommen. Das Diff-Serv Konzept führt zu einer privilegierten Behandlung von dem Verkehr priorisierter Dienstklassen, nicht jedoch zu einer zuverlässigen Kontrolle des Verkehrsvolumens.

Ein anderer Ansatz für im Hinblick auf eine quality of service Übertragung über IP Netze ist durch das RSVP (resource reservation protocol) gegeben. Bei diesem Protokoll handelt es sich um ein Reservierungsprotokoll, mit dessen Hilfe eine Bandbreitenreservierung entlang eines Pfades vorgenommen wird. Über diesen Pfad kann dann eine quality of service (QoS) Übertragung stattfinden. Das RSVP Protokoll wird zusammen mit dem MPLS (multi protocol label switching) Protokoll eingesetzt, das virtuelle Pfade über IP Netze ermöglicht. Für eine Garantie der QoS Übertragung wird in der Regel entlang des Pfades das Verkehrsaufkommen kontrolliert und gegebenenfalls beschränkt. Durch die Einführung von Pfaden verliert man jedoch viel von der ursprünglichen Flexibilität von IP Netzen.

Zentral für Garantien von Übertragungsqualitätsparametern bzw. Dienstgütemerkmale ist eine effiziente Kontrolle des Verkehrs. Neben der Verhinderung von Überlast ist die Reaktion des Netzes auf Störfälle, z.B. Ausfall eines Verbindungsabschnitts (in der Fachliteratur meist Link genannt) oder eines Routers bzw. Knotens mitentscheidend, ob Dienstgütemerkmale - vor allem in Hinblick auf Datenverkehr unter Echtzeitbedingungen - eingehalten werden können. Das Netz sollte mit Mechanismen und Ressourcen zur schnellen Reaktion auf Störfälle ausgestattet werden. In der Fachliteratur verwendet man für diese Eigenschaft des Netzes häufig den begriff Resilience.

Die Erfindung hat zur Aufgabe, ein Verfahren für die Bereitstellung von Ressourcen zu Anpassungen des Routings bei Störfällen in einem paketorientiertem Netz anzugeben.

Die Aufgabe wird durch ein Verfahren nach Anspruch 1 gelöst.

Bei der Erfindung wird ein Netz betrachtet, das eine Zugangskontrolle bzw. Zulässigkeitsprüfung zumindest für Datenpakete einer Verkehrsklasse vorsieht. Die Zulässigkeitsprüfung wird mittels Grenzen bzw. Budgets für zu übertragenden Verkehr durchgeführt. Im Rahmen der Zulässigkeitsprüfung wird beispielsweise geprüft, ob die Zulassung einer Gruppe von Datenpaketen oder eines Flows zu einem Überschreiten einer Grenze führen würde. Falls dieser Test bzw. diese Prüfung negativ ist, wird die Übertragung der entsprechende Gruppe von Datenpaketen bzw. des entsprechenden Flows abgewiesen. Zulässigkeitsprüfungen können für den gesamten übertragenden Verkehr oder auch nur für eine Verkehrsklasse durchgeführt werde, wobei dann die durch die Zulässigkeitsprüfung angestrebte Übertragungsqualität nur für die entsprechende Verkehrsklasse bereitgestellt werden kann. Die Zugangskontrolle kann sich auf das Netz als ganzes oder auf einzelne Links beziehen. Beispiele für Protokolle, die auf Links bezogene Zulässigkeitsprüfungen beinhalten, sind z.B. das ATM Verfahren oder das Integrated Services·Konzept, welches für IP Netze angewant wird. Die Zugangskontrolle hat zum Ziel, die Übertragungsqualität für die Datenpakete der Verkehrsklasse zu verbessern. Die Kriterien für die Zugangskontrolle werden so gewählt, dass die Übertragung der Datenpakete der Verkehrsklasse Qualitätskriterien erfüllt. Das kann auf eine feste Reservierung von Bandbreite auf einzelnen Links hinauslaufen (z.B. ATM, MPLS), sich auf eine Priorisierung von Verkehrsklassen beschränken (z.B. Diff-Serv) oder auf eine Kontrolle des gesamten Verkehrsaufkommen im Netz und dessen Verteilung bzw. Austarierung zwecks Einhaltung von Dienstgütemerkmalen bedeuten. Letzterer Fall kann mit der weiter unten vorgestellten Wahl von Grenzen für die Zugangskontrolle realisiert werden.

Der Erfindung liegt die Idee zugrunde, wenigstens einen möglichen Störfall bei der Festlegung der Grenzen für die Zugangskontrolle zu berücksichtigen. Die Grenzen werden nach Maßgabe eines Qualitätskriteriums bzw. eines Dienstgütemerkmals so bestimmt, dass dieses Qualitätskriterium auch im Störfall eingehalten wird. Diese Bestimmung kann wie folgt vorgenommen werden:

Das Routing innerhalb des Netzes wird auf den Ausfall eines Netzelements (z.B. Link oder Router) hin angepasst. Die Anpassung kann aus einer sehr einfachen Reaktion bestehen, wie den Verwurf von Paketen. Bei modernen paketorientierten Netzen ist jedoch in der Regel vorgesehen, dass neue Next Hops bzw. neue nächste Zieladressen berechnet und die Routingtabellen entsprechend angepasst werden. Nachrichten über die geänderte Topologie des Netzes werden im Netz propagiert, z.B. mittels link state Nachrichten für die häufig benutzten link state Protokolle. Die für den Routingtabellen der Router verwendeten Topologieinformationen konvergieren dann unter Berücksichtigung der Nichtverfügbarkeit des ausgefallenen Netzelementes. Neuere Verfahren betreffen ein schnelles Rerouting von Paketen, die normalerweise über das ausgefallene Netzelement übertragen würden, z.B. durch eine entsprechende Einfügung bzw. Änderung von Adressinformationen im Paketkopf. Erfindungsgemäß wird zumindest ein Qualitätskriterium bei der Übertragung von Datenpaketen betrachtet, z.B. der Verlust an Paketen bzw. die Paketverlustrate, die Verzögerung bei der Übertragung von Paketen oder der Jitter. Grenzwerte für die Zulässigkeitsprüfung werden für die bei Ausfall des Netzelements resultierende Netztopologie - im folgenden als Ausfalltopologie bezeichnet - in Abhängigkeit der im Netz vorgesehenen Reaktionen auf den Ausfall so bestimmt, dass das Qualitätskriterium auch bei ausgefallenen Netzelement eingehalten wird. Routing und Fehlerkorrekturmechanismen werden dabei berücksichtigt. Mögliche Routingverfahren bzw. Routingmechanismen sind z.B. klassisches single path routing wie OSPF (open shortest path first), multi-path routing wie OSPF/ECMP (open shortest path first/Equal cost multipath) oder MPLS Ersatzpfade bzw. MPLS fast rerouting. Beispielsweise kann durch die Bestimmung der Grenzwerte sichergestellt werden, dass bei für eine im Netz vorgesehenes schnelles Rerouting bzw. Umlenken der Pakete genügend Bandbreite vorhanden ist. In diesem Falle wäre das Qualitätskriterium die Reservebandbreite oder die Verzögerungszeiten der bei dem Fehlerfall umgeleiteten Pakete. Die Bestimmung der Grenzwerte kann z.B. in einer zentralen oder verteilten Kontrollinstanz, z.B. in einem Steuerserver des Netzes, vorgenommen werden und beispielsweise durch Simulation der Verkehrsflüsse für die Ausfalltopologie in Abhängigkeit der Grenzwerte vorgenommen werden.

Die Grenzen für die Zugangskontrolle werden entsprechend der bestimmten, die Ausfalltopologie berücksichtigenden Grenzwerte festgesetzt. Diese Bestimmung bzw. Wahl der Grenzen entspricht einer Bereitstellung von Ressourcen für den Ausfall des Netzelements, um auch in diesem Fall die Einhaltung des Qualitätskriteriums zu gewährleisten.

Die Erfindung hat den Vorteil, dass auch in dem Störfall das Qualitätskriterium erfüllt ist. Vor allem in Hinblick auf Dienstgütemerkmale für Echtzeitverkehr ist wichtig, diese unabhängig von Störfällen garantieren zu können.

Das erfindungsgemäße Verfahren lässt sich dahingehend erweitern, dass für eine Mehrzahl von Ausfalltopologien Grenzwerte bestimmt und jeweils das Minimum eines Grenzwertes als Grenze für die Zugangskontrolle verwendet wird. Auf diese Weise wird das Qualitätskriterium bzw. werden die Qualitätskriterien für alle durch die Mehrzahl von Ausfalltopologien abgedeckten Störfälle garantiert. Für die Auswahl der Auswahltopologien gibt es viel Möglichkeiten, z.B.

 o Es werden alle Topologien betrachtet, in denen ein einzelner Link ausgefallen ist.
 o Es werden zusätzlich alle Topologien betrachtet, in denen eine größere Anzahl von Links gleichzeitig ausgefallen sind (z.B. 2 oder 3 Links).
 o Alternativ oder zusätzlich werden alle Topologien betrachtet, in denen jeweils ein Knoten ausgefallen ist.
 o Alternativ oder zusätzlich werden alle Topologien betrachtet, in denen mehrere Knoten ausgefallen sind.
 o Die zu betrachtenden Ausfalltopologien werden anhand anderer topologischer Kriterien ausgewählt, z.B. müssen die Ausfälle solcher Links, die für das Routing zu besonders vielen Zielen verwendet werden, auf jeden Fall auch bei Mehrfachausfällen berücksichtigt werden.

o Die zu betrachtenden Ausfalltopologien werden anhand der Linkkapazitäten ausgewählt, z.B. müssen Links mit hoher Kapazität auch bei Mehrfachausfällen berücksichtigt werden, Links mit geringer Kapazität dagegen nicht.

o Die zu betrachtenden Ausfalltopologien werden anhand der Anzahl angeschlossener Teilnehmer, des geplanten oder gemessenen Verkehrsaufkommens bestimmt (z.B. Knoten mit vielen Teilnehmern müssen berücksichtigt werden, Knoten mit wenigen Teilnehmern nicht).

Entsprechend einer Weiterbildung kann der Netzbetreiber die oben genannten Kriterien für Ausfalltopologien (z.B. an einem Management-Interface oder Benutzeroberfläche) auswählen. In die Berechnung bzw. Bestimmung der Grenzwerte bzw. Budgets können Verkehrsverteilungsgewichte, d.h. eine Kriterium welcher Anteil des Verkehrs wird auf welchen Next Hop weitergegeben wird, einbezogen werden. Alternativ können diese Verteilungsgewichte alle als gleich angenommen werden, d.h. für jedes Ziel ist an einem Knoten das Verteilgewicht für die Next Hops gleich dem Kehrwert der Anzahl der Next Hops zu diesem Ziel. Eine andere Alternative ist, diese Verteilungsgewichte alle zu Eins anzunehmen (sehr konservativer Ansatz).

Bei Anschluss mittels dual homing (zwei Leitungen von unterschiedlichen Netzrandknoten zu einem Teilnehmer oder Teilnehmernetz) kann entweder eine vorgegebene Verkehrsverteilung berücksichtigt werden, oder es kann grundsätzlich die Reservierung bei beiden Leitungen auf die Budgets bzw. Grenzen angerechnet werden.

Entsprechend einer Weiterbildung wird das erfindungsgemäße Verfahren durch Resilience-Prioritäten ergänzt. Entsprechend dieser Prioritäten können z.B. zwei unterschiedliche Verkehrsklassen unterschieden werden. Es werden für jedes Budget zwei verschiedene Werte $B\_R$ (geschützt) und $B\_E$ (ungeschützt) berechnet. $B\_E$ wird nur auf der Basis der Originaltopologie (ohne Ausfälle) berechnet, $B\_R$ wird nach den oben beschriebenen Verfahren über alle zu berücksichtigenden Ausfalltopologien berechnet und ist daher stets kleiner oder gleich $B\_E$. Pakete tragen (z.B. in einem zusätzlichen Bit im TOS/DSCP-Feld oder als speziellen TOS-DSCP-Wert entsprechend dem Diff-Serv Verfahren, das ein type of service (TOS) Feld für den differentiated services codepoint (DSCP) vorsieht) eine Kennung, die angibt, ob im Falle eines Ausfalles der Verkehr weitertransportiert werden muss oder nicht. Geschützte Reservierungen werden auf beide Budgets angerechnet, ungeschützte nur auf $B\_E$.

Dieser Mechanismus kann auch zur Erzeugung mehrerer Klassen von Resilience-Prioritäten bzw. Verkehrsklassen verwendet werden, indem unterschiedliche Ausfalltopologien zugrunde gelegt werden. Dabei können z.B. die Budgets $B\_T$ für eine besonders geschützte Klasse so berechnet werden, dass alle Ausfalltopologien mit Einfach- oder Mehrfach-Linkausfällen sowie alle einfachen Knotenfehler berücksichtigt sind. Eine zweite "normal geschützte" Klasse basiert auf Budgets, die nur einfache Linkausfälle berücksichtigen und eine dritte (ungeschützte) Klasse verwendet Budgets, die nur auf Basis der Originaltopologie bestimmt wurden.

Solche Resilience-Prioritäten können direkt mit Scheduling-Prioritäten für Verkehrsklassen in den Netzknoten gekoppelt werden.

Entsprechend einer Weiterbildung können folgende, Typen von Grenzen für die Zulässigkeitsprüfung zum Einsatz kommen:

- Grenzen für ein maximales Verkehrsaufkommen zwischen jeweils einem Netzeingangsknoten und einem Netzausgangsknoten.
- Grenzen für ein maximales Verkehrsaufkommen des bei einem Netzeingangsknoten in das Netz eintretenden Verkehrs und für ein maximales Verkehrsaufkommen des bei einem Netzausgangsknoten austretenden Verkehrs.
- Grenzen für ein maximales bei einem Netzeingangsknoten eintretendes und über einen Link geleitetes Verkehrsaufkommen sowie ein maximales bei einem Netzausgangsknoten austretendes und über einen Link geleitetes Verkehrsaufkommen.

Diese verschiedenen Typen von Grenzen können auch miteinander kombiniert werden. Für eine Übertragung unter Echtzeitbedingungen über ein paketorientiertes Netz können alle Flows zumindest einer Verkehrsklasse am Netzrand einer Zulässigkeitsüberprüfung mit einer der oben beschriebenen Grenzen unterzogen werden. Auf diese Weise wird das gesamte Verkehrsvolumen kontrolliert und kann auf die verfügbare Bandbreite abgestimmt werden

Die Rolle des erfinderischen Verfahrens für Datenübertragung unter Einhaltung von Dienstgütemerkmalen wird im folgenden im Rahmen eines Ausführungsbeispiels anhand einer Figur näher erläutert.

Der Einfachheit halber wird das Verfahren nur für eine Ausfalltopologie dargestellt, die durch den Ausfall eines Links gegeben ist. Durch entsprechendes Vorgehen für eine Vielzahl von Ausfalltopologien kann das Netz gegen alle wahrscheinlichen Störfälle gesichert werden.

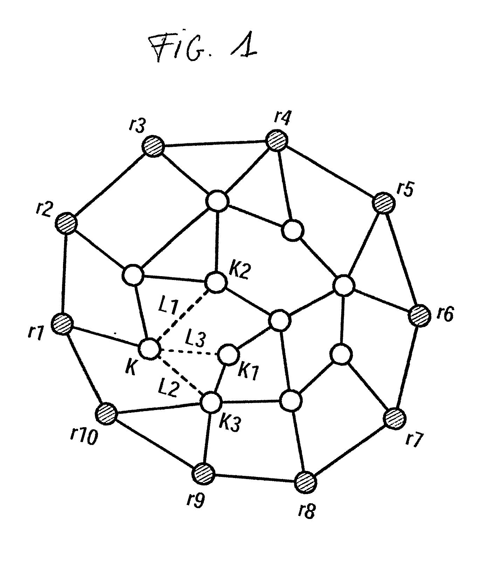

In der Figur ist ein aus Knoten und Links gebildetes Netz gezeigt. Dabei sind die Randknoten r1 bis r10 durch gefüllte Kreise gekennzeichnet. Die inneren Knoten sind durch nicht gefüllte Kreise dargestellt. Links sind veranschaulicht durch Verbindungen zwischen Knoten. Für das Netz können verschiedene Arten von Randbedingungen definiert werden, die eine Zulassungskontrolle am Netzrand gewährleisten. Die Art der Randbedingungen kann beispielsweise in Abhängigkeit der Topologie des Netzes gewählt werden. Die Form der Randbedingungen entscheidet mit, bei welchen Blokkierungswahrscheinlichkeiten Überlastsituation in den erfindungsgemäßen Verfahren vorkommen. Mögliche Randbedingungen sind:

1. Grenzen für den Verkehr, der zwischen zwei Randknoten übertragen wird, d.h. jeweils ein Grenzwert für ein Paar (Ri,Rj), j,i $\in$ {1,..,10}, das durch zwei Randknoten gegeben ist.

2. Grenzwerte für alle Eingangs- und Ausgangsknoten. Wenn wir annehmen, dass alle Randknoten Ri, i $\in$ {1,..,10} sowohl Eingangs- wie Ausgangsknoten sind, würde das 20 Grenzwerte ergeben, wobei jeweils zwei Grenzwerte, ein Eingangsgrenzwert und ein Ausgangsgrenzwert, einem Randknoten zugeordnet ist. Für einen Flow, der von dem Eingangsknoten ri zu dem Ausgangsknoten rj übertragen werden soll, würde dann überprüft werden, ob der Knoten die Eingangsgrenze für ri oder die Ausgangsgrenze für rj überschreiten würde. Bei Überschreiten wäre eine Abweisung die Folge.

3. Ein- und Ausgangsgrenzwerte wie bei 2. jedoch für alle Links des Netzes. Das heißt, man hätte für jeden Link L jeweils zwei Grenzen pro Randknoten. Für die Übertragung eines Flows vom Knoten ri zum Knoten rj würden die Eingangsgrenzen von ri und die Ausgangsgrenzen von rj geprüft werden, die sich auf Links beziehen, über die der Flow zu übertragen ist.

Im Folgenden wird der Einfachheit halber von Grenzwerten der Form 1 ausgegangen.

Die betrachtete Ausfalltopologie resultiere durch Ausfall des gepunktet dargestellten Links L3. Das Netz reagiere darauf durch ein schnelles Rerouting der über den Link L3 zu übertragenden Datenpakete. So werden z.B. die von dem Knoten K zu dem Knoten K1 über den Link L gerouteten Pakete unmittelbar nach Benachrichtigung des Knotens K über den Linkausfall über die gestrichelt eingezeichneten Links L1 und L2 zu den Knoten K2 und K3 geroutet. Das kann beispielsweise erreicht werden, indem in den Header der Datenpakete explizit die Adressen für das Routing zu den nächsten Hops spezifiziert wird. Auf diese Weise soll verhindert werden, dass

• Pakete verloren gehen und
• großen Verzögerungen bei dem Routing der Pakete auftritt.

Idealerweise können durch das schnelle Rerouting Dienstgütemerkmale von Echtzeitverkehr auch in dem Fehlerfall garantiert werden. Dazu muss jedoch sichergestellt werden, dass der Mehrverkehr aufgrund des Reroutings zu keiner Überlast führt. Erfindungsgemäß werden die Grenzen für die Zugangskontrolle so festgesetzt, dass dies nicht der Fall ist. Insbesondere wird ein Überlast auf den Links L1 und L2 vermieden.

Für die folgende Darstellung werden folgende Größen eingeführt:

BBB(ri,rj): die Grenze für das Verkehrsaufkommen zwischen dem Eingangsknoten ri und dem Ausgangsknoten rj c(L): das Verkehrsaufkommen auf dem Netzabschnitt (Link) L aV(ri,rj,L): das anteilsmäßige Verkehrsaufkommen über den Link L des gesamten Verkehrsaufkommens zwischen dem Eingangsknoten ri und dem Ausgangsknoten rj

Anhand von Verkehrsmodellen bzw. Simulationen und Messungen lassen sich für die betrachtete Ausfalltopologie die Werte von dem anteilsmäßigen Verkehrsaufkommen aV(ri,rj,L) für alle (nicht ausgefallenen) Links L bestimmen.

Für jeden der Links L gilt dann:

$$\texttt{C(L) = } \sum \texttt{BBB(ri,rj)} \bullet \texttt{ aV(ri,rj,L),} \qquad \texttt{(1)}$$

wobei die Summe über alle Netzeingangsknoten ri und Netzausgangsknoten rj läuft. Durch die Gleichung (1) sind die Parameter c(L) mit den Grenzen BBB(ri,rj) in Relation gesetzt. Die Grenzen BBB(ri,rj) können nun so festgesetzt werden, dass für alle Links L (mit Ausnahme des gestörten Link L3 natürlich) das Verkehrsaufkommen C(L) nicht die zur Verfügung stehende Bandbreite auf dem jeweiligen Link L übersteigt. Insbesondere kann durch die Festsetzung der Grenzen BBB(ri,rj) mittels Gleichung (1) für die Links L1 und L2 eine Überlast vermieden werden. Im Resultat werden die Grenzen BBB(ri,rj) durch Betrachtung der Überlastsituation in Gleichung (1) so niedrig festgesetzt, dass auf den Links L1 und L2 ausreichend Bandbreite für eine schnelle Fehlerreaktion zur Verfügung steht. Ein entsprechendes Vorgehen kann für eine Vielzahl von Ausfalltopologien erfolgen, z.B. für alle einfachen Linkausfälle. In diesem Fall wird jeweils das Minimum der für die verschiedenen Ausfalltopologien bestimmten Grenzen BBB(ri,rj) verwendet.

Die Randbedingungen lassen sich mit anderen Randbedingungen kombinieren, die für zusätzlichen Zulässigkeitsprüfungen verwendet werden, z.B. mit den Randbedingungen vom Typ 2:

Für eine Ausgestaltung mit zwei zusätzlichen Zulässigkeitsprüfungen lässt sich folgender mathematischer Zusammenhang formulieren. Es gelten die obigen Definitionen. Zudem sei

Ingress(ri): Der Grenzwert für den Verkehr über den Netzeingangsknoten ri,
Egress(rj): Der Grenzwert für den Verkehr über den Ausgangsknoten rj,
$\delta$(ri,rj): Das Verkehrsaufkommen zwischen dem Netzeingangsknoten ri und dem Netzausgangsknoten rj.

Es lassen sich nun folgende Ungleichungen formulieren:

Für alle i gilt

$$\sum \delta(ri,rj) \le Ingress(ri), \text{ Summe über alle j.} \quad (2)$$

Für alle j gilt

$$\sum \delta(ri,rj) \le Egress(rj), \text{ Summe über alle i.} \quad (3)$$

Für alle 2-Tupel (i,j) gilt

$$\delta(ri,rj) \le BBB(ri,rj). \quad (4)$$

Für alle Links L mit Ausnahme des ausgefallenen Link gilt:

$$c(L) = \sum \delta(ri,rj) \cdot aV(ri,rj,L), \text{ Summe über alle i und j.} \quad (5)$$

Mit Hilfe des Simplex-Algorithmus können für vorgegebene Werte von Ingress(ri), Egress(rj) und BBB(ri,rj) die maximalen c(L) berechnet werden, die die Ungleichungen (2) bis (4) erfüllen. Anders herum kann für einen Satz Grenzen bzw. Grenzwerte Ingress(ri), Egress(rj) und BBB(ri,rj) überprüft werden, ob auf einem Link L (z.B. Link L1 oder L2) eine unzulässig hohe Last auftreten kann. Eine der zu hohen Last entgegenwirkende Änderung der Grenzen bzw. Grenzwerte kann in diesem Fall vorgenommen werden.

**Patentansprüche**

1. Verfahren zur Bereitstellung von Ressourcen für eine Anpassung des Routings als Reaktion auf den Ausfall eines Netzelements (L3) in einem paketorientierten, mit Knoten (K, K1, K2, K3) und Links (L1, L2, L3) gebildeten Netz, wobei zumindest für Datenpakete einer Verkehrsklasse eine Zugangskontrolle mittels Grenzen (BBB(ri,rj)) durchgeführt wird und Datenpakete nicht zugelassen werden, wenn sonst eine Grenze (BBB(ri,rj)) überschritten würde, bei dem

   - wenigstens ein durch den Ausfall eines Netzelements (L3) gegebener möglicher Störfall bei der Festlegung der Grenzen (BBB(ri,rj)) für die Zugangskontrolle berücksichtigt wird, indem

     -- das Routing von einer Gruppe von Datenpaketen im Netz bei Ausfall des Netzelements (L3) bestimmt wird, und
     -- Grenzwerte für die Zugangskontrolle nach Maßgabe der Einhaltung wenigstens eines Übertragungsqualitätskriteriums bei dem Routing der Gruppe von Datenpaketen für den Fall des durch den Ausfall des Netzelements (L3) gestörten Netz bestimmt werden, und

-- die Grenzen (BBB(ri,rj)) für die Zugangskontrolle nach Maßgabe der so bestimmten Grenzwerten festgesetzt werden.

**2.** Verfahren nach Anspruch 1,
**dadurch gekennzeichnet,**

- **dass** das Netzelement (L3) durch einen Link (L1, L2, L3) oder einen Knoten (K, K1, K2, K3) gegeben ist.

**3.** Verfahren nach Anspruch 1 oder 2,
**dadurch gekennzeichnet,**

- **dass** eine Ausfalltopologie durch die im Netz bestehende Vernetzung von Knoten (K, K1, K2, K3) durch Links (L1, L2, L3) bei Ausfall eines oder mehrerer Netzelemente (L3) gegeben ist,
- **dass** Grenzwerte für die Zulassungskontrolle nach Maßgabe der Einhaltung wenigstens eines Übertragungsqualitätskriteriums bei dem Routing der Gruppe von Datenpaketen eine Mehrzahl von Ausfalltopologien bestimmt werden, und
- die einzelnen Grenzen (BBB(ri,rj)) für die Zulässigkeitsprüfung zu dem Netz entsprechend dem jeweiligen Minimum der so bestimmten Grenzwerte festgesetzt werden.

**4.** Verfahren nach Anspruch 3,
**dadurch gekennzeichnet,**

- **dass** die Mehrzahl von Ausfalltopologien alle Topologien umfasst, in denen ein einzelner Link (L1, L2, L3) ausgefallen ist.

**5.** Verfahren nach Anspruch 3 oder 4,
**dadurch gekennzeichnet,**

- **dass** die Mehrzahl von Ausfalltopologien alle Topologien umfasst, in denen ein einzelner Knoten (K, K1, K2, K3) ausgefallen ist.

**6.** Verfahren nach einem der Ansprüche 3 bis 5,
**dadurch gekennzeichnet,**

- **dass** die Mehrzahl von Ausfalltopologien Topologien umfasst, in denen mehr als ein Netzelement (L3) ausgefallen ist.

**7.** Verfahren nach einem der vorhergehenden Ansprüche,
**dadurch gekennzeichnet,**

- **dass** eine erste Mehrzahl von Grenzen (BBB(ri,rj)) entsprechend einem Verfahren nach einem der Ansprüche 1 bis 6 bestimmt wird,
- **dass** eine zweite Mehrzahl von Grenzen (BBB(ri,rj)) ohne Berücksichtigung von Ausfalltopologien bestimmt wird,
- **dass** für Datenpakete einer ersten Verkehrsklasse eine Zulässigkeitsprüfung mittels der ersten Mehrzahl von Grenzen (BBB(ri,rj)) durchgeführt wird, und
- **dass** für Datenpakete einer zweiten Verkehrsklasse eine Zulässigkeitsprüfung mittels der zweiten Mehrzahl von Grenzen (BBB(ri,rj)) durchgeführt wird.

**8.** Verfahren nach einem der vorhergehenden Ansprüche,
**dadurch gekennzeichnet,**

- **dass** eine erste Mehrzahl von Grenzen (BBB(ri,rj)) entsprechend einem Verfahren nach einem der Ansprüche 1 bis 6 nach Maßgabe einer ersten Mehrzahl von Ausfalltopologien bestimmt wird,
- **dass** eine zweite Mehrzahl von Grenzen (BBB(ri,rj)) entsprechend einem Verfahren nach einem der Ansprüche 1 bis 6 nach Maßgabe einer zweiten Mehrzahl von Ausfallstopologien bestimmt wird,
- **dass** für Datenpakete einer ersten Verkehrsklasse eine Zulässigkeitsprüfung mittels der ersten Mehrzahl von Grenzen (BBB(ri,rj)) durchgeführt wird, und

- **dass** für Datenpakete einer zweiten Verkehrsklasse eine Zulässigkeitsprüfung mittels der zweiten Mehrzahl von Grenzen (BBB(ri,rj)) durchgeführt wird.

9. Verfahren nach einem der vorhergehenden Ansprüche,
**dadurch gekennzeichnet,**

   - **dass** Grenzen (BBB(ri,rj)) für die Zulässigkeitsprüfung ein maximales Verkehrsaufkommen zwischen einem Netzeingangsknoten (ri) und einem Netzausgangsknoten (rj) betreffen.

10. Verfahren nach einem der vorhergehenden Ansprüche,
**dadurch gekennzeichnet,**

   - **dass** Grenzen (BBB(ri,rj)) für die Zulässigkeitsprüfung ein maximales Verkehrsaufkommen für bei einem Netzeingangsknoten in das Netz eintretenden Verkehr und ein maximales Verkehrsaufkommen für bei einem Netzausgangsknoten austretenden Verkehr betreffen.

11. Verfahren nach einem der vorhergehenden Ansprüche,
**dadurch gekennzeichnet,**

   - **dass** Grenzen (BBB(ri,rj)) für die Zulässigkeitsprüfung ein maximales bei einem Netzeingangsknoten eintretendes und über einen Link geleitetes Verkehrsaufkommen sowie ein maximales bei einem Netzausgangsknoten austretendes und über einen Link (L1, L2, L3) geleitetes Verkehrsaufkommen betreffen.

12. Router mit Mitteln zur Durchführung eines Verfahrens nach einem der Ansprüche 1 bis 11.

**Claims**

1. Method for providing resources for adapting routing as a reaction to the failure of a network element (L3) in a packet-oriented network formed with nodes (K, K1, K2, K3) and links (L1, L2, L3), with at least for data packets of one traffic class a barring check being conducted by means of limits (BBB(ri,rj)) and data packets not being allowed if this would exceed a limit (BBB(ri,rj)),
in which

   - at least one possible malfunction resulting from the failure of a network element (L3) is taken into consideration for determining the limits (BBB(ri,rj)) for the access control, in that

      -- routing of a group of data packets in the network is determined for the failure of the network element (L3), and
      -- limit values for the access control are determined in accordance with adherence to at least one transmission quality criterion in which routing of the group of data packets is determined for the case of the network disturbed by the failure of the network element (L3), and
      -- the limits (BBB(ri,rj)) for access control are fixed in accordance with the limit values defined in this way.

2. Method in accordance with claim 1,
**characterized in that**

   - the network element (L3) is specified by a link (L1, L2, L3) or a node (K, K1, K2, K3).

3. Method in accordance with claim 1 or 2,
**characterized in that**

   - a failure topology is specified by the networking of nodes (K, K1, K2, K3) through links (L1, L2, L3) on failure of one or more network elements (L3),
   - the limit values for the barring control are determined in accordance with compliance with at least one transmission quality criterion for the routing of the group of data packets of a plurality of failure topologies, and
   - the individual limits (BBB(ri,rj)) for the barring check for the network are fixed in accordance with the relevant minimum of the limit values thus defined.

**4.** Method in accordance with claim 3,
**characterized in that**

- the plurality of failure topologies includes all topologies

in which an individual link (L1, L2, L3) has failed.

**5.** Method in accordance with claim 3 or 4,
**characterized in that**

- the plurality of failure topologies includes all failure topologies in which an individual node (K, K1, K2, K3) has failed.

**6.** Method in accordance with one of the claims 3 to 5,
**characterized in that**

- the plurality of failure topologies includes topologies in which more than one network element (L3) has failed.

**7.** Method in accordance with one of the previous claims.
**characterized in that**

- a first plurality of limits (BBB(ri,rj)) is determined according to a method in accordance with one of the claims 1 to 6,
- a second plurality of limits (BBB(ri,rj)) is determined without taking failure topologies into consideration,
- for data packets of a first traffic class a barring check is performed by means of the first plurality of limits (BBB(ri,rj)), and
- for data packets of a second traffic class a barring check is performed by means of the second plurality of limits (BBB(ri,rj)),

**8.** Method in accordance with one of the previous claims.
**characterized in that**

- a first plurality of limits (BBB(ri,rj)) is determined according to a method in accordance with one of the claims 1 to 6, on the basis of a first plurality of failure topologies,
- a second plurality of limits (BBB(ri,rj)) is determined according to a method in accordance with one of the claims 1 to 6, on the basis of a second plurality of failure topologies,
- for data packets of a first traffic class a barring check is performed by means of the first plurality of limits (BBB(ri, rj)), and
- for data packets of a second traffic class a barring check is performed by means of the second plurality of limits (BBB(ri,rj)),

**9.** Method in accordance with one of the previous claims.
**characterized in that**

- limits (BBB(ri,rj)) for the barring checks relate to a maximum volume of traffic between an ingress node (ri) and an egress node (rj).

**10.** Method in accordance with one of the previous claims.
**characterized in that**

- limits (BBB(ri,rj)) for the barring checks relate to a maximum volume of traffic for traffic entering the network at an ingress node and a maximum volume of traffic for traffic leaving the network at an egress node.

**11.** Method in accordance with one of the previous claims.
**characterized in that**
limits (BBB(ri,rj)) for the barring checks relate to a maximum volume of traffic arriving at an ingress node and routed over a link as well as a maximum volume of traffic leaving at an egress node and routed over a link (L1, L2, L3).

**12.** Router with means for performing a method in accordance with one of the claims 1 to 11.

**Revendications**

**1.** Procédé pour la mise à disposition de ressources pour une adaptation du routage comme réaction à la défaillance d'un élément de réseau (L3) dans un réseau orienté paquets, formé avec des noeuds (K, K1, K2, K3) et des liens (L1, L2, L3), un contrôle d'accès étant effectué au moyen de limites (BBB (ri, rj)) au moins pour des paquets de données d'une classe de trafic et des paquets de données n'étant pas autorisés lorsqu'une limite (BBB (ri, rj)) a été dépassée,
dans lequel

- au moins un incident possible causé par la défaillance d'un élément de réseau (L3) est pris en compte lors de la fixation des limites (BBB (ri, rj)) pour le contrôle d'accès, du fait que

-- le routage d'un groupe de paquets de données dans le réseau est déterminé en cas de défaillance de l'élément de réseau (L3) et
-- des valeurs limites pour le contrôle d'accès sont déterminées en fonction du respect d'au moins un critère de qualité de transmission lors du routage du groupe de paquets de données pour le cas du réseau perturbé par la défaillance de l'élément de réseau, et
-- les limites (BBB (ri, rj)) pour le contrôle d'accès sont fixées en fonction des valeurs limites ainsi déterminées.

**2.** Procédé selon la revendication 1, **caractérisé en ce que**

- l'élément de réseau (L3) est donné par un lien (L1, L2, L3) ou un noeud (K, K1, K2, K3).

**3.** Procédé selon la revendication 1 ou 2, **caractérisé en ce que**

- une topologie de défaillance est donnée par l'interconnexion existant dans le réseau de noeuds (K, K1, K2, K3) par des liens (L1, L2, L3) en cas de défaillance d'un ou de plusieurs éléments de réseau (L3),
- **en ce que** des valeurs limites pour le contrôle d'agrément sont déterminées en fonction du respect d'au moins un critère de qualité de transmission lors du routage du groupe de paquets de données pour une majorité de topologies de défaillance, et
- les grandeurs (BBB (ri, rj)) individuelles pour le test d'agrément avec le réseau sont fixées en fonction du minimum respectif des valeurs limites ainsi définies.

**4.** Procédé selon la revendication 3,
**caractérisé en ce que**

- la majorité des topologies de défaillance comprend toutes les topologies dans lesquelles un lien (L1, L2, L3) individuel est défaillant.

**5.** Procédé selon la revendication 3 ou 4,
**caractérisé en ce que**

- la majorité des topologies de défaillance comprend toutes les topologies dans lesquelles un noeud (K, K1, K2, K3) individuel est tombé en panne.

**6.** Procédé selon l'une quelconque des revendications 3 à 5,
**caractérisé en ce que**

- la majorité des topologies de défaillance comprend des topologies dans lesquelles plus d'un élément (L3) est tombé en défaillance.

**7.** Procédé selon l'une quelconque des revendications précédentes,
**caractérisé en ce que**

- une première majorité de limites (BBB (ri, rj)) est déterminée en fonction d'un procédé selon l'une quelconque des revendications 1 à 6,
- une seconde majorité de limites (BBB (ri, rj)) est déterminée sans la prise en compte de topologies de défaillance,
- pour des paquets de données d'une première classe de trafic, un essai d'agrément est effectué au moyen de la première majorité de limites (BBB (ri, rj)), et
- pour des paquets de données d'une seconde classe de trafic, on effectue un test d'agrément au moyen de la seconde majorité de limites (BBB, (ri, rj)).

8.   Procédé selon l'une quelconque des revendications précédentes, **caractérisé en ce que**

- une première majorité de limites (BBB (ri, rj)) est déterminée en fonction d'un procédé selon l'une quelconque des revendications 1 à 6, en fonction d'une première majorité de topologies de défaillance,
- une seconde majorité de limites (BBB (ri, rj)) est déterminée en fonction d'un procédé selon l'une quelconque des revendications 1 à 6, en fonction d'une seconde majorité de topologies de défaillance,
- pour des paquets de données d'une première classe de trafic, un essai d'agrément est effectué au moyen de la première majorité de limites (BBB (ri, rj)), et
- pour des paquets de données d'une seconde classe de trafic, un essai d'agrément est effectué au moyen de la seconde majorité de limites (BBB (ri, rj)).

9.   Procédé selon l'une quelconque des revendications précédentes, **caractérisé en ce que**

- des limites (BBB (ri, rj)) pour l'essai d'agrément concernent un volume de trafic maximum entre un noeud d'entrée de réseau (ri) et un noeud de sortie de réseau (rj).

10.  Procédé selon l'une quelconque des revendications précédentes,
**caractérisé en ce que**

- des limites (BBB (ri, rj)) pour l'essai d'agrément concernent un volume de trafic maximum pour un trafic entrant dans le réseau dans le cas d'un noeud d'entrée de réseau et un volume de trafic maximum pour un trafic sortant dans le cas d'un noeud de sortie de réseau.

11.  Procédé selon l'une quelconque des revendications précédentes, **caractérisé en ce que**

- des limites (BBB (ri, rj)) pour le contrôle d'agrément concernent un volume de trafic maximum entrant dans le cas d'un noeud d'entrée de réseau et acheminé au moyen d'un lien et un volume de trafic maximum, sortant dans le cas d'un noeud de sortie de réseau et acheminé par un lien (L1, L2, L3).

12.  Routeur avec des moyens pour la mise en oeuvre d'un procédé selon l'une quelconque des revendications 1 à 11.

FiG. 1

**EP 1 593 241 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0999674 A